# EUROPÄISCHE PATENTSCHRIFT

(11) **EP 1 792 789 B1**
(45) Veröffentlichungstag und Bekanntmachung des Hinweises auf die Patenterteilung: **22.10.2008**
(21) Anmeldenummer: 06123104.9
(22) Anmeldetag: 27.10.2006
(51) Int. Cl.: B60R 21/017

(54) **Steuergerät zur Ansteuerung von Personenschutzmittel**
Control device to control a person protection device
Dispositif de contrôle pour contrôler un dispositif de protection de personne

(30) Priorität: 01.12.2005 DE 102005057302
(43) Veröffentlichungstag der Anmeldung: 06.06.2007
(73) Patentinhaber: ROBERT BOSCH GMBH, 70442 Stuttgart (DE)
(72) Erfinder: Eckert, Bernd, 71665, Vaihingen An Der Enz (DE)

(56) Entgegenhaltungen:
- US-A1- 2004 196 615

## Beschreibung

### Stand der Technik

Die Erfindung betrifft ein Steuergerät zur Ansteuerung von Personenschutzmitteln nach der Gattung des unabhängigen Patentanspruchs.

Aus DE 10 2004 010 135 A1 ist es bereits bekannt, eine Energiereserve, vorzugsweise einen Elektrolytkondensatoren in einem Steuergerät zur Ansteuerung von Personenschutzmittel zu verwenden, um in einem Auslösefall für die Personenschutzmittel Zündelemente für die Personenschutzmittel mit Energie aus der Energiereserve zu bestromen, um damit die Zündelemente auszulösen.

Aus US 2004/0196615 A1 ist ein Airbagsteuergerät bekannt, wobei als Energiereserve Kondensatoren verwendet werden, die als eine Kondensatorbank mit fünf Kondensatoren ausgebildet sind. Dafür können Aluminiumelektrolytkondensatoren verwendet werden.

Dieses Dokument offenbart den Oberbegriff des Anspruchs 1.

### Offenbarung der Erfindung

Das erfindungsgemäße Steuergerät zur Ansteuerung von Personenschutzmitteln mit den Merkmalen des unabhängigen Patentanspruchs hat dem gegenüber den Vorteil, dass durch die Verwendung einer Kondensatorfolie die großen Elektrolytkondensatoren, die bis zu 3cm hoch sein können, entfallen und damit der mechanische Aufbau erheblich vereinfacht werden kann. Anhand der Menge der Kondensatorfolie wird die entsprechende Kapazität eingestellt. Durch den Entfall der Größenbeschränkung durch das Bechervolumen können entsprechend große Kapazitäten erzeugt werden. Ebenso ermöglicht die Verwendung der Kondensatorfolie, dass auf eine erhöhte Ruheenergiereservespannung, wie bei den Elektrolytkondensatoren üblich, verzichtet werden kann. Damit werden dann auch entsprechende Pumpschaltungen vereinfacht beziehungsweise überflüssig. Über die Aufteilung der Kondensatorfolie kann bei Bedarf ebenfalls galvanisch getrennte Energiereserven erzeugt werden. Insgesamt entsteht damit eine sehr fertigungs- und kostengünstige Konstruktion, wobei gemäß der Erfindung die nicht elektronischen Hauptkostenträger bis auf das Substrat ersatzlos wegfallen oder wie unten dargestellt durch eine einfache Schrumpffolie ersetzt werden.

Als Kondensatorfolie kann Aluminiumfolie eingesetzt werden, wie sie im klassischen Kondensatorbau ebenfalls verwendet wird. Als Aufbau kann ebenfalls der bekannte Folienaufbau verwendet werden: Anode / Elektrolyt-Papierseparator / Kathode. Üblicherweise wird als Anodenfolie eine Aluminiumfolie mit etwas dickerer Oxidschicht als bei der Kathode eingesetzt.

Erfindungsgemäß ist, dass die wenigstens eine Kondensatorfolie gewickelt ist. Damit kann die Kondensatorfolie um das Substrat, das die Logikschaltung üblicher Weise trägt oder zumindest mit ihr verbunden ist, mit der Kondensatorfolie umwickelt werden, sodass das Substrat als Wickelkern für die Kondensatorfolie wirkt. Durch die Umwicklung des Substrats werden Hochfrequenzein- und - abstrahlungen stark gedämpft. Damit wird eine einfach herzustellende Konfiguration geschaffen.

Alternativ ist es möglich, dass die wenigstens eine Folie gefaltet ist. Insbesondere kann dann die gefaltete Folie im Substrat angeordnet sein, zumindest in wesentlichen Teilen.

Durch die in den abhängigen Ansprüchen aufgeführten Maßnahmen und Weiterbildungen sind vorteilhafte Verbesserungen des im unabhängigen Patentanspruch angegebenen Steuergeräts zur Ansteuerung von Personenschutzmitteln möglich.

Es ist vorteilhafter Weise vorgesehen, dass auf dem Substrat ein isolierender Bereich vorliegt, auf dem die wenigstens eine Kondensatorfolie aufgewickelt ist. Damit werden EMV-Ein- und Abstrahlungen vermieden bzw. stark bedämpft. Es handelt sich hierbei um Hochfrequenzstrahlung.

Vorteilhafter Weise kann die Kondensatorfolie beschichtet sein, sodass die Autarkiezeit der Energiereserve beeinflusst wird, also insbesondere verlängert wird. Durch Einsatz beispielsweise der Folien der Lithium-Polymertechnik (Lithium-Anode / Polymermatrix-Separator / Metalloxid-Kathode) kann die Energiedichte erhöht werden, was zu entweder zu längeren Autarkiezeiten des Steuergeräts oder zu kleinerem Bauvolumen führt.

Das Substrat und die Logikschaltung können vorteilhafter Weise mit der Kondensatorfolie in eine weitere Folie eingeschweißt werden, sodass das Airbagsteuergerät als versiegelte Steckkarte vorliegt. Dies stellt eine einfache und kostengünstige Art dar, um ein Steuergerät zu kapseln. Alternativ ist es natürlich möglich, Gehäuse zu verwenden.

### Zeichnung

Ausführungsbeispiele der Erfindung sind in der Zeichnung dargestellt und werden in der nachfolgenden Beschreibung näher erläutert.

Es zeigen:
- Figur 1: die Konfiguration mit gewickelter Folie,
- Figur 2: die Konfiguration mit gefalteter Folie und
- Figur 3: das Gesamtsystem.

### Beschreibung

Erfindungsgemäß wird vorgeschlagen, wenigstens eine Kondensatorfolie zu verwenden, um die Energiereserve in einem Steuergerät zur Ansteuerung von Personenschutzmitteln wie Airbags oder Gurtstraffern oder Überrollbügeln oder Fußgängerschutzmitteln zu verwenden. Die Folie kann portioniert werden, um gegebenenfalls mehrere Energiereserven darzustellen. Das Einschweißen in die Folie bietet jedoch die Verwendung der Direktsteckung in den fahrzeugseitigen Kabelbaumstecker. Die Kondensatorfolie besteht aus Aluminiumfolie, wie sie im klassischen Kondensatorbau ebenfalls verwendet wird. Als Aufbau kann ebenfalls der bekannte Folienaufbau verwendet werden: Anode / Elektrolyt-Papierseparator / Kathode. Üblicherweise wird als Anodenfolie eine Aluminiumfolie mit etwas dickerer Oxidschicht als bei der Kathode eingesetzt.

Alternativ können Folien der Lithium-Polymertechnik (Lithium-Anode / Polymermatrix-Separator/ Metalloxid-Kathode) zur Erhöhung der Energiedichte eingesetzt werden.

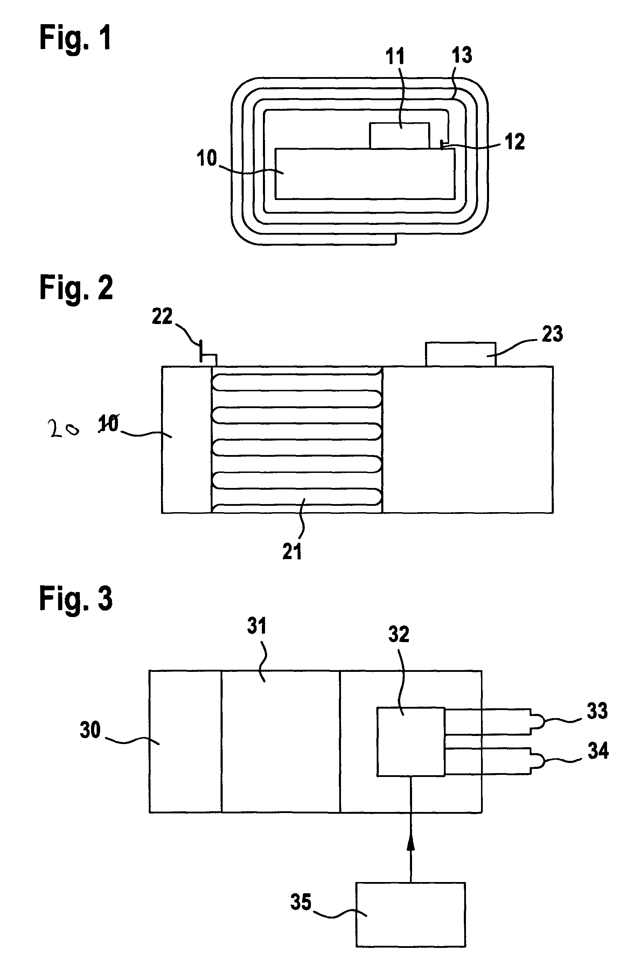

Figur 1 zeigt in einem ersten Beispiel eine gewickelte Kondensatorfolie 13 um ein Substrat 10, auf dem sich eine Logikschaltung 11 befindet, wobei die Kondensatorfolie 13 über die Anschlussfahne 12 mit der Logikschaltung 11 verbunden ist. Als Verbindungstechnik ist neben dem Löten an die Anschlussfahne auch ein Bonden oder Einpressen möglich. Durch die Größe der Kondensatorfolie 13 kann die Kapazität verändert werden, die die Energiereserve aufnehmen soll. Die Logikschaltung 11 erweist einen Mikrocontroller zur Auswertung von Sensordaten auf, insbesondere Beschleunigungssensordaten. Die Sensoren, die diese Sensordaten liefern, sind im Fahrzeug verteilt angebracht, ebenfalls auf dem Substrat 10. Diese Daten werden dann über Leitungen oder Funk an das in Figur 1 dargestellte Modul übertragen, um dort ausgewertet zu werden. Auch andere Sensoren, wie Insassensensoren oder Umfeldsensoren können hier verwendet werden. Die Logikschaltung 11 weist noch weitere Bauelemente auf, wie beispielsweise Interface-Bausteine zu den Sensoren. Weiterhin ist die Logikschaltung 11 über eine Zündkreisansteuerung mit Zündelementen verbunden, die hier der Einfachheit halber nicht dargestellt sind. Diese Zündelemente werden dann mittels der Energie, die in der Energiereserve 13 abgespeichert ist, im Auslösfall bestromt, um diese zu zünden. Die in Figur 1 dargestellt Konfiguration kann in Folie eingeschweißt werden und so als PC-Einsteckkarte, beispielsweise direkt in den Kabelbaum, eingesteckt werden. Die Beschleunigungssensoren können vorzugsweise auf dem Fahrzeugtunnel angeordnet sein.

Figur 2 zeigt ein weiteres Ausführungsbeispiel des erfindungsgemäßen Steuergeräts. Das Steuergerät weist nunmehr wiederum ein Substrat 20 auf und eine Logikschaltung 23 mit den gleichen Funktionalitäten wie oben dargestellt. Die Energiereserve 21 ist nunmehr wiederum eine Kondensatorfolie, die jedoch gefaltet ist und in das Substrat eingelagert ist. Es ist möglich, dass die Kondensatorfolie 21 nur zum Teil im Substrat eingelagert ist. Auch hier sind die Stellen, mit denen die Kondensatorfolie mit dem Substrat in Verbindung kommt, isoliert.

Figur 3 zeigt in einem weiteren Bild die Gesamtkonfiguration. Hier ist auf einem Substrat 30 die aufgewickelte oder gefaltete Kondensatorfolie 31 angebracht. Eine Logikschaltung 32 verarbeitet Signale der internen Sensoren und/oder von außerhalb des Steuergeräts befindlicher Sensoren 35 und bestromt im Auslösefall die Zündelemente 33 und 34 mit der Energie aus der Energiereserve 31.

## Patentansprüche

1. Steuergerät zur Ansteuerung von Personenschützmitteln mit wenigstens einer Energiereserve (13, 21, 31), die zur Bestromung von wenigstens einem Zündelement (33, 34) dient, wobei die wenigstens eine Energiereserve (13, 21, 31) wenigstens eine Kondensatorfolie (13, 21, 31) aufweist, **dadurch gekennzeichnet, dass** die wenigstens eine Kondensatorfolie (13, 31) um ein Substrat (10, 30) gewickelt ist und dass das Substrat (10, 30) mit einer Logikschaltung (11, 32) zur Ansteuerung der Personenschutzmittel verbunden ist oder dass die wenigstens eine Kondensatorfolie (21, 31) gefaltet ist, wobei die wenigstens eine gefaltete Kondensatorfolie (21, 31) im Substrat (20, 30) angeordnet ist, wobei das Substrat (20, 30) mit der Logikschaltung (23, 32) zur Ansteuerung der Personenschutzmittel verbunden ist.

2. Steuergerät nach Anspruch 1, **dadurch gekennzeichnet, dass** das Substrat (10, 30) einen isolierenden Bereich aufweist, auf dem die wenigstens eine Kondensatorfolie (13, 31) aufgewickelt ist.

3. Steuergerät nach einem der Ansprüche 1 oder 2, **dadurch gekennzeichnet, dass** die wenigstens eine Kondensatorfolie (13, 31) derart beschichtet ist, dass eine Autarkiezeit der Energiereserve beeinflusst wird.

4. Steuergerät nach einem der vorhergehenden Ansprüche **dadurch gekennzeichnet, dass** das Substrat (10, 20, 30) mit der Logikschaltung (11, 23, 32) und der wenigstens einen Kondensatorfolie (13, 21, 31) in Folie eingeschweißt ist.

5. Steuergerät nach einem der Ansprüche 1 bis 3, **dadurch gekennzeichnet, dass** das Substrat (10, 20, 30) mit der Logikschaltung (11, 23, 32) und der wenigstens einen Kondensatorfolie (13, 21, 31) von einem Gehäuse umgeben ist.

## Claims

1. Control device for controlling means of personal protection, comprising at least one energy reserve (13, 21, 31), which serves for supplying power to at least one firing element (33, 34), the at least one energy reserve (13, 21, 31) having at least one capacitor foil (13, 21, 31), **characterized in that** the at least one capacitor foil (13, 31) is wound around a substrate (10, 30) and **in that** the substrate (10, 30) is connected to a logic circuit (11, 32) for controlling the means of personal protection or **in that** the at least one capacitor foil (21, 31) is folded, the at least one folded capacitor foil (21, 31) being arranged in the substrate (20, 30) and the substrate (20, 30) being connected to the logic circuit (23, 32) for controlling the means of personal protection.

2. Control device according to Claim 1, **characterized in that** the substrate (10, 30) has an insulating region, on which the at least one capacitor foil (13, 31) is wound up.

3. Control device according to either of Claims 1 and 2, **characterized in that** the at least one capacitor foil (13, 31) is coated in such a way that an autonomy time of the energy reserve is influenced.

4. Control device according to one of the preceding claims, **characterized in that** the substrate (10, 20, 30) with the logic circuit (11, 23, 32) and the at least one capacitor foil (13, 21, 31) is welded in the foil.

5. Control device according to one of Claims 1 to 3, **characterized in that** the substrate (10, 20, 30) with the logic circuit (11, 23, 32) and the at least one capacitor foil (13, 21, 31) is surrounded by a housing.

## Revendications

1. Appareil de commande pour commander des moyens de protection de personnes comportant au moins une réserve d'énergie (13, 21, 31) servant à alimenter au moins un élément d'allumage (33, 34),
au moins la réserve d'énergie (13, 21, 31) comporte au moins un condensateur en forme de film (13, 21, 31),
**caractérisé en ce que**
- au moins le condensateur en forme de film (13, 31) est enroulé autour d'un substrat (10, 30) et
le substrat (10, 30) est relié à un circuit logique (11, 32) pour commander le moyen de protection des personnes, ou
- au moins le condensateur en forme de film (21, 31) est réalisé de façon à ce que plié, il soit prévu dans le substrat (20, 30), et
le substrat (20, 30) est relié au circuit logique (23, 32) pour commander le moyen de protection des personnes.

2. Appareil de commande selon la revendication 1,
**caractérisé en ce que**
le substrat (10, 30) comporte une zone isolante sur laquelle est enroulé au moins un condensateur en forme de film (13, 31).

3. Appareil de commande selon l'une des revendications 1 ou 2,
**caractérisé en ce qu'**
au moins un condensateur en forme de film (13, 31) est revêtu pour influencer le temps d'autarcie de la réserve d'énergie.

4. Appareil de commande selon l'une des revendications précédentes,
**caractérisé en ce que**
le substrat (10, 20, 30) avec le circuit logique (11, 23, 32) et au moins le condensateur en forme de film (13, 21, 31) sont soudés dans un film.

5. Appareil de commande selon l'une des revendications 1 à 3,
**caractérisé en ce que**
le substrat (10, 20, 30) est entouré par le circuit logique (11, 23, 32) et au moins un condensateur en forme de film (13, 21, 31) est entouré par un boîtier.
